# EUROPEAN PATENT APPLICATION

(11) **EP 1 475 812 A2**
(43) Date of publication of application: **10.11.2004**
(21) Application number: 04010790.6
(22) Date of filing: 06.05.2004
(51) Int. Cl.: H01F 41/06

(54) **Electric component and method of producing the same**

(30) Priority: 09.05.2003 JP 2003132161
(71) Applicant: CANON KABUSHIKI KAISHA, Ohta-ku, Tokyo (JP)
(72) Inventor: Suzui, Masaki, Ohta-ku Tokyo (JP)
(74) Representative: Böckelen, Rainer

(57) **Abstract**

In a push-pull switching circuit for a low-voltage, large-current application, it is desired to decrease the resistance of a transformer and of its peripheral circuit. For this purpose, a first coil (35) is wound around a first winding core (31) with respect to as a winding start position a side surface of the first winding core (31) which does not oppose a second winding core (31). A second coil (35) is wound around the second winding core (31), with respect to as a winding start position a side surface of the second winding core (31) which opposes the first winding core (31), in the same winding direction as that of the first coil (35) and in a feeding direction different from that of the first coil (35). The first and second coils are electrically connected in series with each other.

## Description

### FIELD OF THE INVENTION

The present invention relates to an electric component and a method of producing the same and, more particularly, to an electric component such as a transformer or inductor used in a power supply circuit or the like.

### BACKGROUND OF THE INVENTION

In recent years, along with a decrease in power supply voltage and an increase in capacity of information devices, the voltage and current of a switching power supply tend to decrease and increase, respectively.

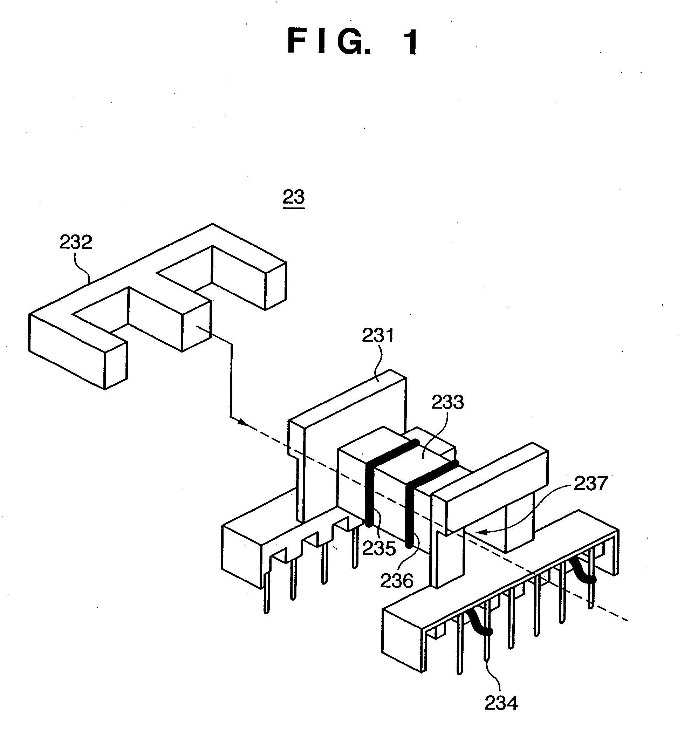

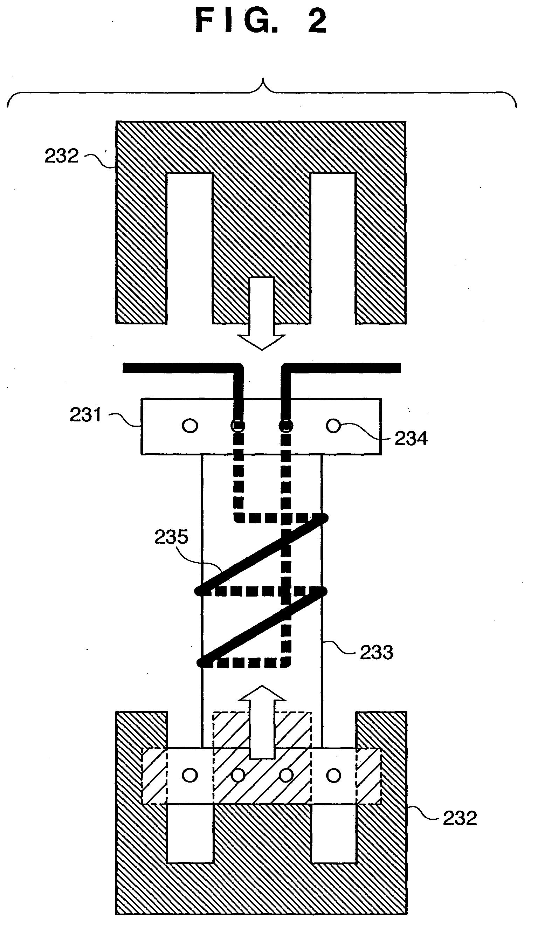

Fig. 1 is a view showing the typical arrangement of a transformer used in the switching power supply, and is disclosed in, e.g., Japanese Patent Laid-Open No. 6-069035. Fig. 2 is a view for explaining the arrangement and winding of a coil, a coil end extracting method, and a core inserting method for a transformer 23 shown in Fig. 1. The transformer 23 is formed by winding a primary coil 235 and secondary coil 236 around a winding core 233, connecting the ends of the respective coils to pin terminals 234 of a bobbin 231, and inserting two E-type cores 232 in insertion ports 237 of the bobbin 231.

When forming the transformer 23, in order to fix electric wires wound around the winding core 233 of the bobbin 231 made of an electrical insulating material to the winding core 233 reliably, so-called taping is performed, that is, the coils are fixed to the winding core 233 entirely or partly by using adhesive tapes or the like.

In a transformer for a low-voltage, large-current power supply, it is significant to decrease the resistances of the coils, and accordingly the number of turns of each coil must be decreased. If the number of turns is one, since it is very difficult to maintain this one turn by only the coil itself, taping described above becomes important. Taping, however, takes up the winding space of the winding core 233, and accordingly the winding core 233 must have a large winding width, resulting in an increase in size of the transformer.

The pin terminals 234 to which the two ends of each coil are to be connected are generally arranged in the vicinities of the two end faces of the winding core 233. Therefore, after the coil is wound, its ends are extracted in directions largely different from substantially helical natural extracting directions. For example, when a plurality of coils are to be wound around the winding core 233, the extracting portions of one coil may come into contact with other coils to further take up the winding space. Thus, the coil winding operation becomes complicated. In particular, for example, when a transformer for a low-voltage, large-current application is to use an electric wire with a large wire diameter, the electric wire is rigid and is difficult to wind, making the operation much more difficult.

In order to solve these problems, a transformer 3 having an arrangement shown in Figs. 3 to 5 has been proposed. Fig. 3 is a perspective view showing the arrangement of the transformer 3. Fig. 4 is a view for explaining the arrangement of coils and a coil extracting method. Fig. 5 is a view of a bobbin 31 seen from a core insertion port 37 side.

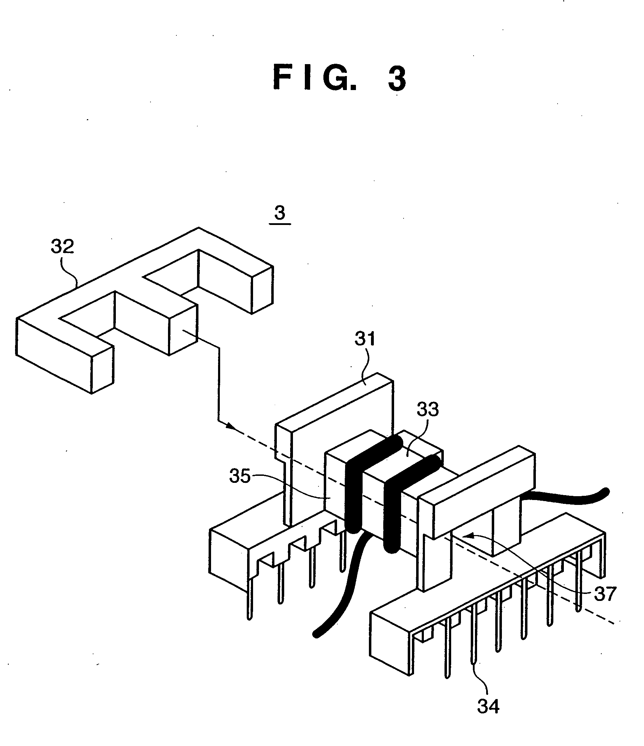

As shown in Figs. 3 to 5, ends A and B of a primary coil 35 serving as the output terminals of the transformer 3 are arranged in a region having ends 331 of the winding width (possible winding area) of a winding core 33 as boundaries. More specifically, in the bobbin 31, the ends of the winding width correspond to the ends 331 of the winding core 33. Output terminals corresponding to the ends A and B are formed in the region having two planes including the ends 331 as the boundary planes.

When the arrangement of the transformer shown in Figs. 3 to 5 is employed, the winding width can be utilized effectively and the workability when a thick electric wire is used is improved, so that the problems described above can be solved.

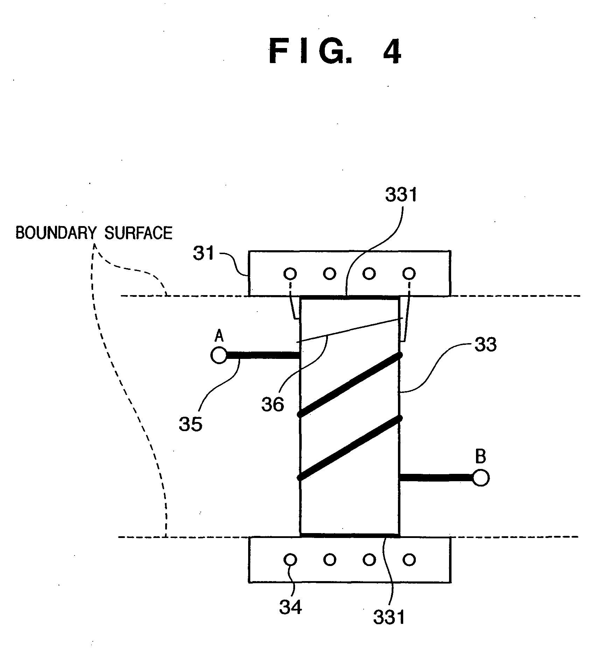

To improve the power conversion efficiency of the transformer, not only a decrease in resistance but also a decrease in core loss is important. Based on the fact that the core loss depends on the voltage applied to the coils, the transformer is formed as a serial body and the voltage acting on each coil is divided, so that the core loss is decreased. In the following description, the winding cores of the transformers or inductors that are connected in series are defined as the first and second winding cores from the left in the drawings. Each of that side of the first winding core which is opposite to a side where the first winding core opposes the second winding core, and that side of the second winding core where the second winding core opposes the first winding core is defined as the winding start reference position of the coil. The end of a coil arranged at the reference position is fixed, and the coil is wound in the feeding direction. The feeding direction refers to the traveling direction of the winding when the coil is to be wound by fixing its winding start position. For example, when the winding start position is the end A shown in Fig. 4, the feeding direction of the primary coil 35 is downward in Fig. 4.

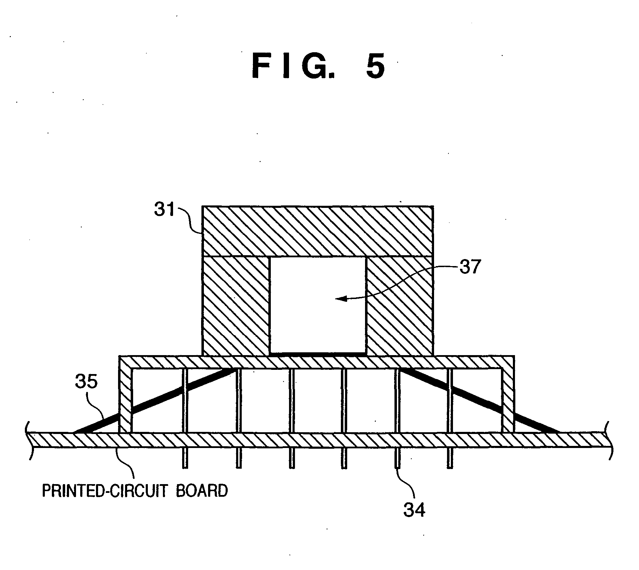

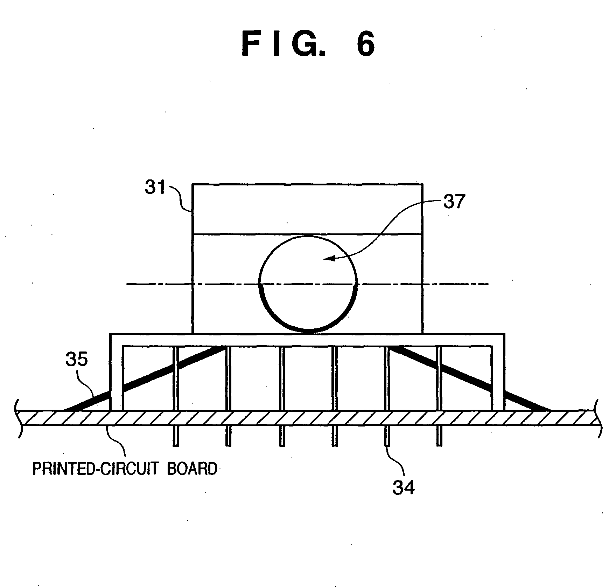

In Fig. 5, that surface of the winding core 33 which opposes a printed-circuit board on which the bobbin 31 is to be mounted is defined as the lower surface. As shown in Fig. 6, when the winding core 33 has a circular or elliptic section, the lower surface is a surface that forms the lower half of the section of the winding core.

A method of winding the coil around the winding core 33 from one end of the winding arranged on the lower surface side of the winding core 33 and extracting the other end of the winding to the lower surface side of the winding core 33 will be called a "lower surface extracting method". For example, the coil of the transformer 3 shown in Fig. 4 corresponds to the lower surface extracting method.

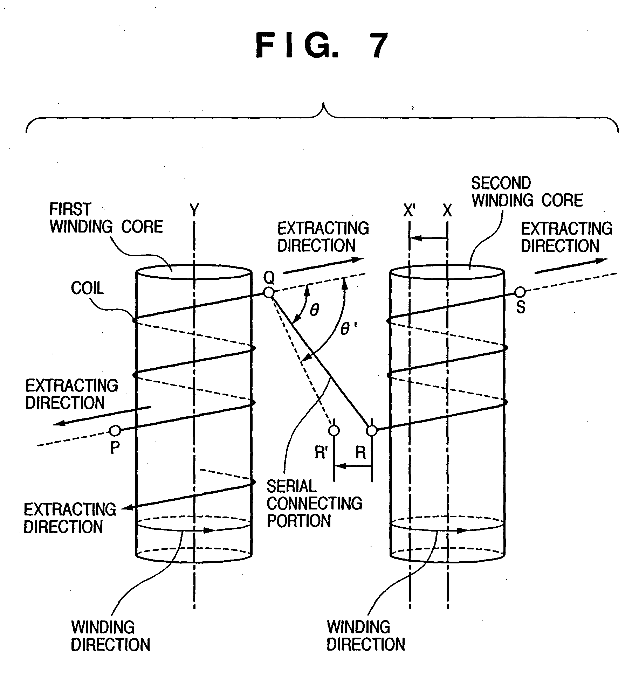

Fig. 7 is a conceptual view for explaining in detail the winding cores and coils of transformers that form a serial body, and the relationship between the coil winding methods and extracting directions. The winding cores 33 have circular sections. The coil to be wound around the first winding core 33 has coil ends P and Q. The coil to be wound around the second winding core 33 has coil ends R and S. A wiring line that connects the ends of the primary coils wound around the two winding cores 33 will be called a serial connecting portion. Accordingly, the wiring line between the coil ends Q and R is a serial connecting portion. As shown in Fig. 7, the direction in which the helically wound winding can be extracted naturally and substantially along a helix will be called a coil extracting direction. The angle formed by the extracting direction and serial connecting portion is defined as an angle θ.

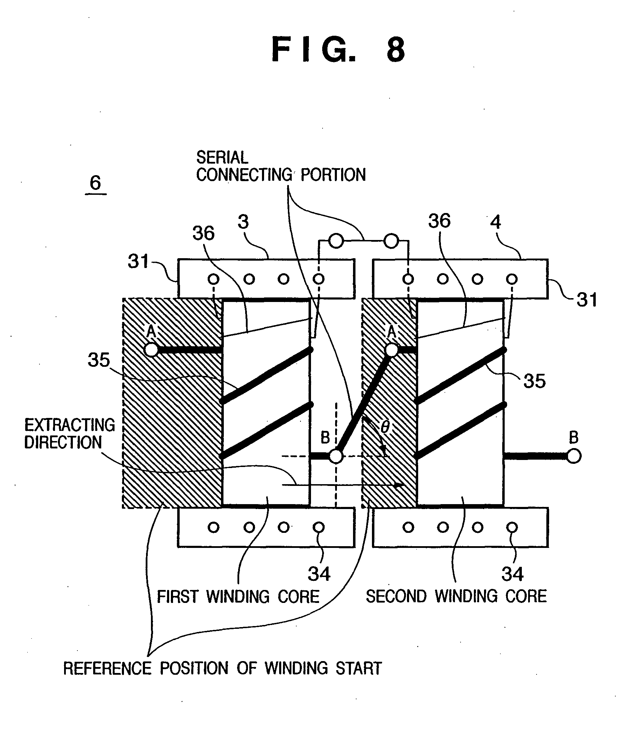

Fig. 8 is a view showing a transformer serial body 6.

In the transformer serial body 6 in which transformers 3 and 4 are connected in series, an end B of a coil 35 wound around the first winding core 33 and an end A of a coil 35 wound around the second winding core 33 are connected to each other through a serial connecting portion, so that the primary coils 35 are connected in series. Secondary coils 36 are also connected in series through pin terminals 34.

As shown in Fig. 8, if bobbins 31 are arranged adjacent to each other such that the longitudinal directions of the winding cores 33 are parallel to each other, as the two coils 35 are fed in one feeding direction, the ends B and A to be connected to each other may be arranged separate from each other in the feeding direction. More specifically, if the serial connecting portion connects ends that are separate from each other in the feeding direction, the angle θ formed by the serial connecting portion and extracting direction becomes large, as shown in Fig. 8. If the two coils are to be connected in series by using one electric wire, after the coil is extracted from the first winding core, its extracting portion must be bent at the angle θ in order to form a serial connecting portion. Then, the extracting portion must be bent at an angle (90° - θ), and after that the coil must be started to be wound around the second winding core 33. This considerably degrades the workability of forming the serial body.

In particular, when wounding a thick, rigid electric wire, to bend the electric wire itself is very difficult. If the electric wire is forcibly bent, the bobbin 31 made of a plastic material or the like may be damaged, and formation of a serial body becomes more difficult. The angle θ may be decreased by bending the extracting portion or changing the extracting direction. Then, however, the extracting portion may overlap an adjacent wiring and push it out. The insulating covering of the winding may then be undesirably stripped off. When the adjacent wiring and extracting portion overlap, they project outside largely from the winding core 33 only at the overlapping portion. Then, due to this projection, a core 32 cannot sometimes be inserted in the bobbin 31. Also, the possible winding area (window area) of the transformers cannot sometimes be utilized effectively.

As shown in Fig. 7, when the distance between the transformers 3 and 4 (winding cores 33) connected in series is small, if the second winding core 33 translates to the left, a coil end R translates to R'. As a result, the angle θ becomes a larger angle θ' . In other words, when the distance between the transformers 3 and 4 (winding cores 33) increases, the angle θ increases, and the extracting portion must be bent more largely, making formation of the series body further more difficult.

As shown in Fig. 8, if the ends B and A of the coils that are to be connected are arranged separate from each other, the serial connecting portion becomes long regardless of the arrangement of the coils or windings which are to form a series body. This increases the resistance.

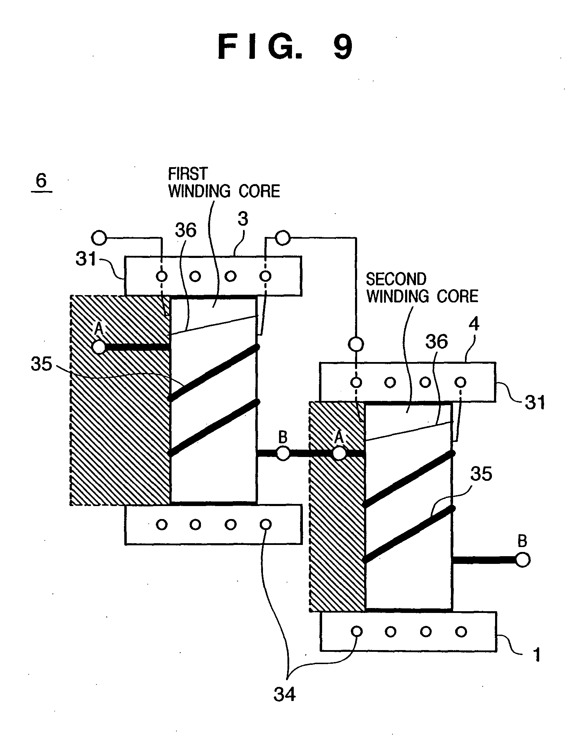

In order to solve the above problems, as shown in Fig. 9, the two bobbins 31 may be arranged to be shifted from each other in the coil feeding direction, so that the angle θ decreases. When, however, the bobbins 31 are arranged as shown in Fig. 9, the area where the two transformers 3 are to be mounted increases, leading to another problem. Also, the serial connecting portion of the secondary coils 36 may be increased unnecessarily.

Therefore, it is desired to eliminate interference with an adjacent wiring so the extracting portion need not be bent largely, and to minimize an increase in resistance caused by the serial connecting portion.

### SUMMARY OF THE INVENTION

According to the first aspect of the present invention, there is disclosed an electric component, which has a first component having a first winding core, and a second component having a second winding core arranged parallel to a longitudinal direction of the first winding core, comprising a first coil which is wound around the first winding core, and a second coil which is wound around the second winding core in a feeding direction different from that of the first coil, wherein the first and second coils are electrically connected in series with each other.

According to the second aspect of the present invention, there is disclosed an electric component, which has a first component having a first winding core, and a second component having a second winding core arranged parallel to a longitudinal direction of the first winding core, comprising first and second coils which are wound around the first winding core to be divided in the longitudinal direction of the first winding core, and third and fourth coils which are wound around the second winding core to be divided in a longitudinal direction of the second winding core, wherein the first to fourth coils are arranged in the longitudinal direction of the first winding core in a direction from the first coil to the second coil in the order of the first and second coils, and then in the order of the third and fourth coils, and the first and third coils, and the second and fourth coils, which are arranged adjacent to each other and electrically connected in series with each other have different feeding directions.

According to the third aspect of the present invention, there is disclosed an electric component, which has a first component having a first winding core, and a second component having a second winding core arranged parallel to a longitudinal direction of the first winding core, comprising first and second coils which are wound around the first winding core to be divided in the longitudinal direction of the first winding core in different feeding directions and in opposite winding directions, and third and fourth coils which are wound around the second winding core to be divided in a longitudinal direction of the second winding core in different feeding directions and in opposite winding directions, wherein the first to fourth coils are arranged in the longitudinal direction of the first winding core in a direction from the first coil to the second coil in the order of the first and second coils, and then in the order of the third and fourth coils, and the first and fourth coils, and the second and third coils, which are electrically connected in series with each other have the same feeding direction, and the first coil has a feeding direction in the longitudinal direction of the first winding core in a direction from the first coil to the second coil.

According to the electric component having the above arrangement, helically wound windings can be extracted naturally and substantially along a winding surface and connected in series with each other. Therefore, interference with an adjacent wiring is eliminated. The extracting portion need not be bent largely. Even if the distance between the first and second components is small, when the extracting portion need not be bent, any trouble that can occur when connecting the first and second components in series with each other can be prevented. Also, the serial connecting portion can be made with a minimum distance, so that an increase in resistance caused by the serial connecting portion can be minimized.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a view showing the typical arrangement of a transformer used in a switching power supply;
Fig. 2 is a view for explaining the arrangement and winding of a coil, a coil end extracting method, and a core inserting method for a transformer shown in Fig. 1;
Fig. 3 is a perspective view showing the arrangement of the transformer in which the extracting directions for the ends of the coil are considered;
Fig. 4 is a view for explaining the arrangement of coils and a coil extracting method of the transformer shown in Fig. 3;
Fig. 5 is a view of the bobbin of Fig. 3 when seen from a core insertion port side;
Fig. 6 is a view for explaining the lower surface of a winding core when the wiring core has a circular or elliptic section;
Fig. 7 is a conceptual view for explaining in detail the winding cores and coils of transformers that form a serial body, and the relationship between the coil winding methods and extracting directions;
Fig. 8 is a view showing a transformer serial body;
Fig. 9 is a view for explaining a method of preventing an increase in resistance caused by a serial connecting portion;

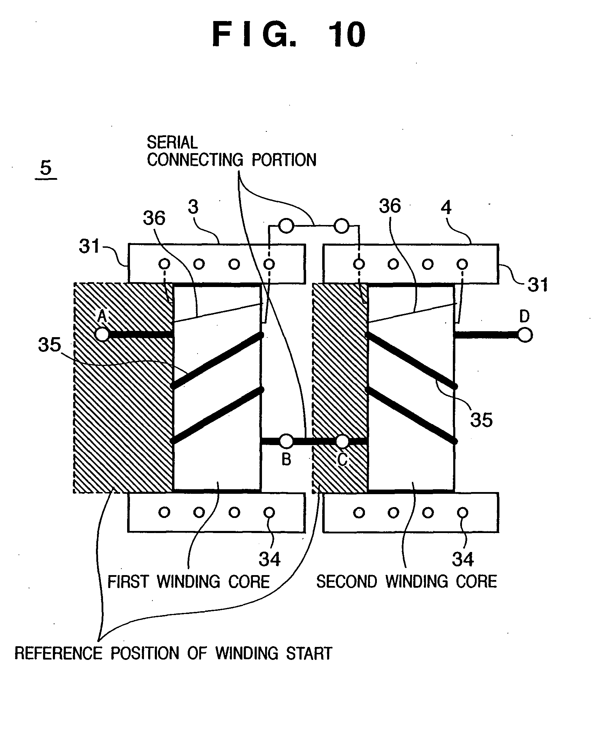

Fig. 10 is a view for explaining the arrangement and extracting method of coils of a transformer series body according to an embodiment;

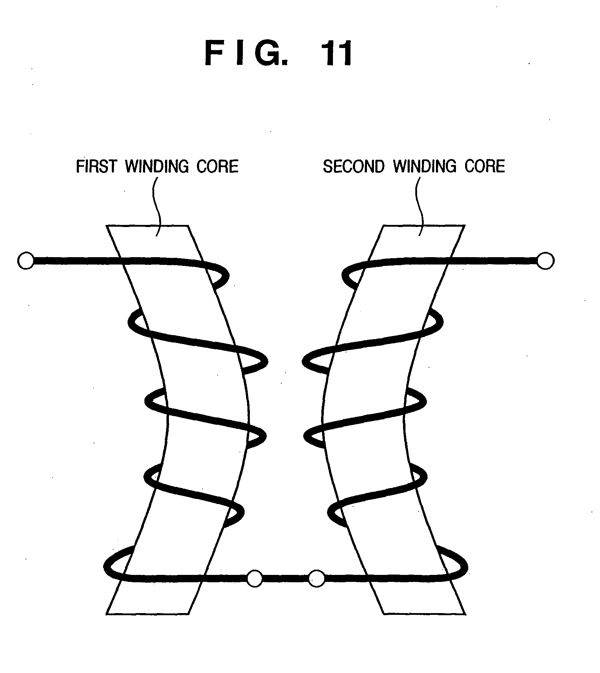

Fig. 11 is a view showing that the present invention can be applied to inductors or transformers having non-columnar winding cores;

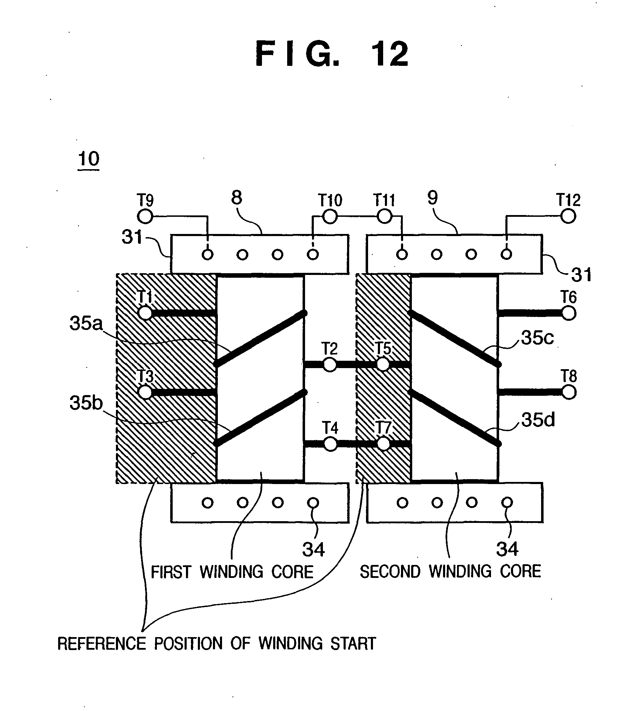

Fig. 12 is a view for explaining the arrangement of a transformer serial body according to the first embodiment;

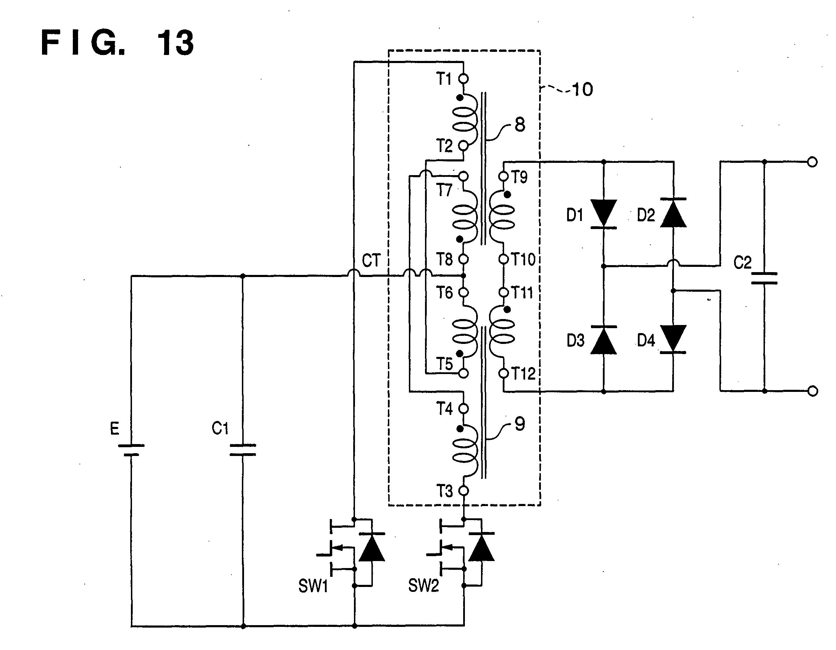

Fig. 13 is a circuit diagram showing the arrangement of a push-pull switching circuit which uses the transformer serial body;

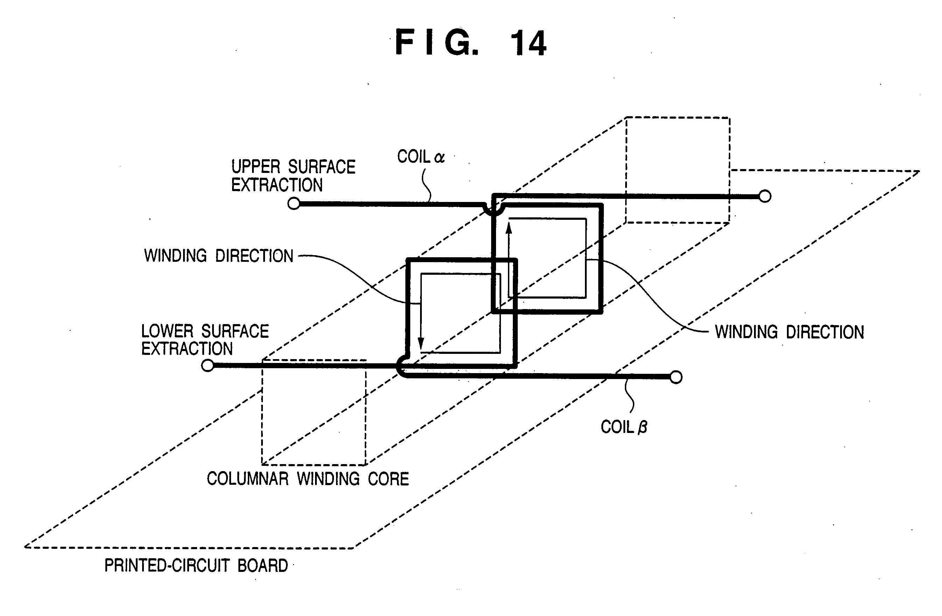

Fig. 14 is a conceptual view for explaining a coil winding method and extracting method according to the second embodiment;

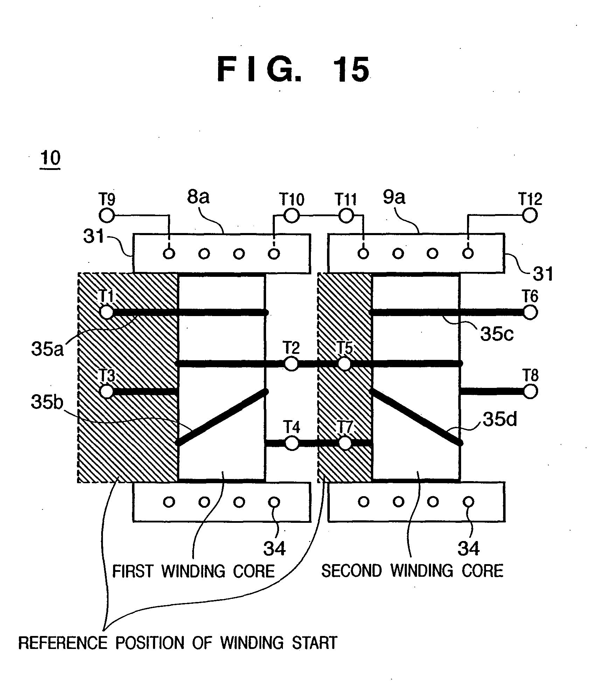

Fig. 15 is a view for explaining the arrangement of a transformer serial body according to the second embodiment;

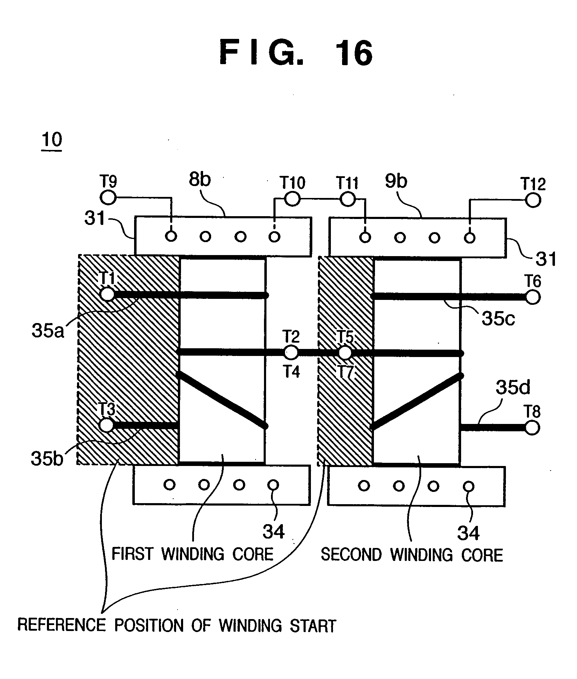

Fig. 16 is a view for explaining the arrangement of a transformer serial body according to the third embodiment;

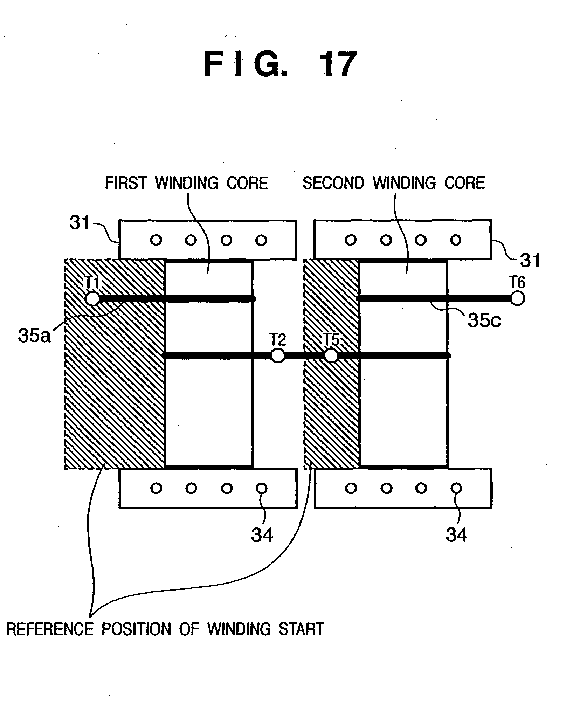

Fig. 17 is a view for explaining a method of winding first and third coils according to the third embodiment;

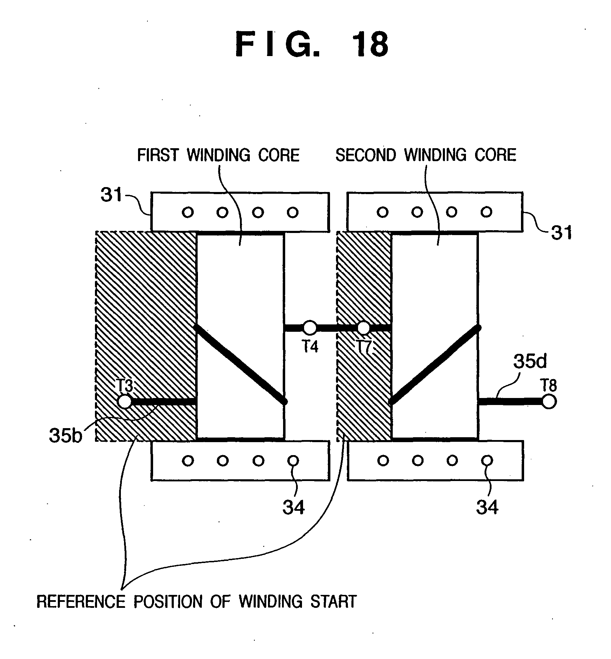

Fig. 18 is a view for explaining a method of winding second and fourth coils according to the third embodiment;

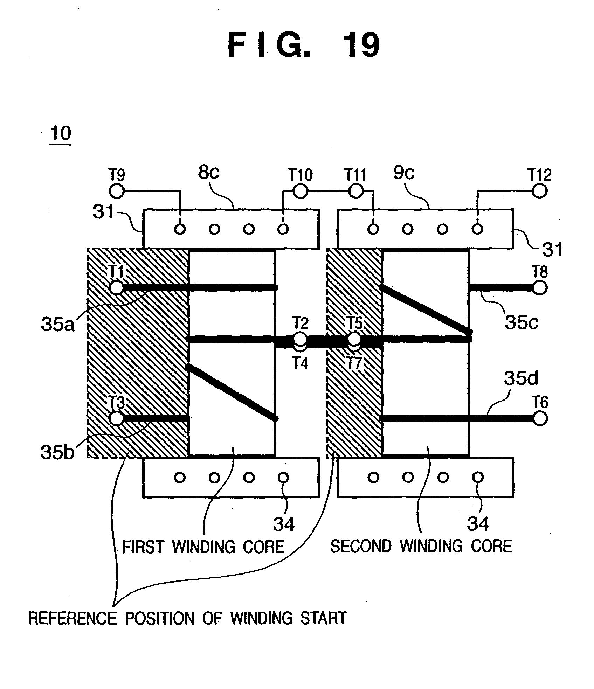

Fig. 19 is a view for explaining the arrangement of a transformer serial body according to the fourth embodiment;

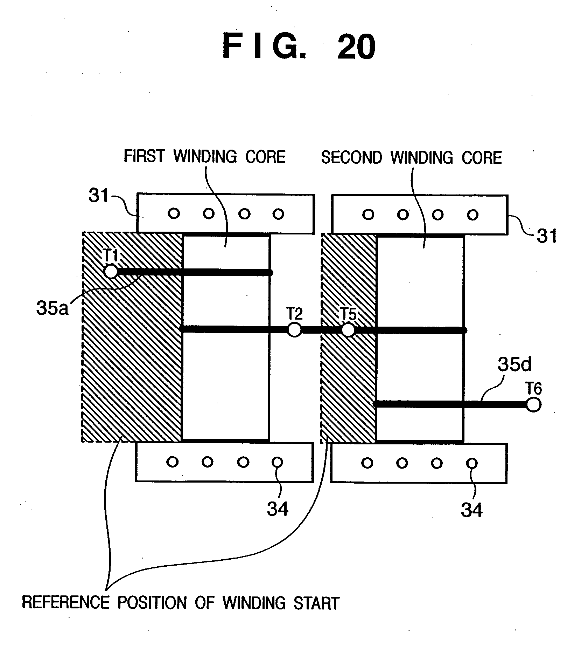

Fig. 20 is a view for explaining a method of winding first and fourth coils according to the fourth embodiment;

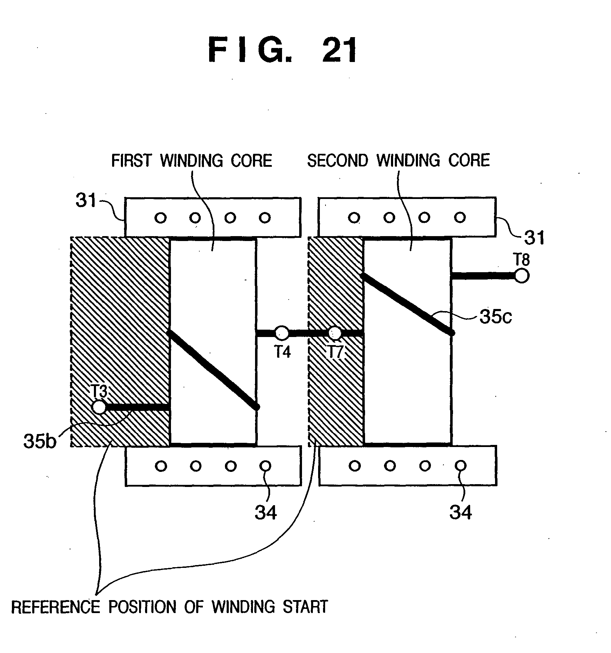

Fig. 21 is a view for explaining a method of winding second and third coils according to the fourth embodiment;

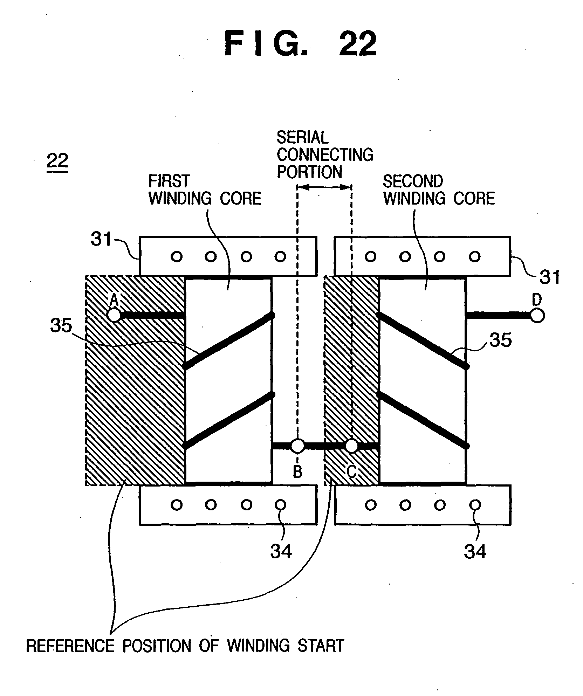

Fig. 22 is a view showing the coil arrangement of an inductor serial body according to the fifth embodiment; and

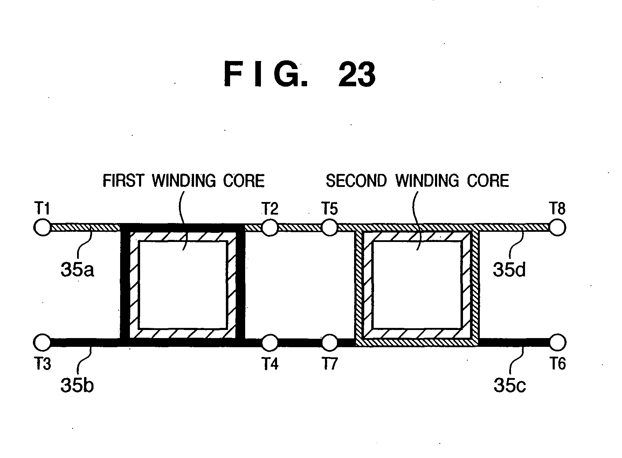

Fig. 23 is a view of the transformer serial body according to the fourth embodiment seen from the insertion port side of a bobbin.

### DETAILED DESCRIPTION OF THE PREFERRED EMBODIMENTS

A transformer according to an embodiment of the present invention will be described. Note that the present invention can be applied not only to a transformer but also to a magnetic component such as an inductor. In the following description, the same components as in the transformer serial body 6 shown in Fig. 8 and the like are denoted by the same reference numerals, and a detailed description thereof will be omitted.

Fig. 10 is a view for explaining the arrangement and extracting method of coils of a transformer series body 5 according to the embodiment.

The transformer serial body 5 is formed by applying the present invention to a coil arrangement shown in Figs. 3 to 5, which is proposed by the present applicant. Therefore, the ends of primary coils 35 serving as the output terminals of the transformer serial body 5 are arranged within a region having flanges (ends of the winding width) of bobbins 31 as the boundaries.

Referring to Fig. 10, the primary coils 35 of transformers 3 and 4 are wound for two turns by the lower surface extracting method from their ends A and C in accordance with the definition for the reference position of coil winding start, and their coil ends B and D form terminal ends. The transformer serial body 5 is different from the transformer serial body 6 shown in Fig. 8 in the feeding directions of the coils 35. The feeding direction of the primary coil 35 of the transformer 3 is the same as that of the transformer serial body 6, but the feeding direction of the primary coil 35 of the transformer 4 is opposite to that of the transformer serial body 6. In other words, the two primary coils 35 are wound in different feeding directions. Note that secondary coils 36 have the same arrangement as that of the transformer serial body 6.

When the feeding directions of the primary coils 35 are set as shown in Fig. 10, the serial connecting portion of the transformer serial body 5 becomes the shortest and extends substantially in the same direction as the extracting direction. Therefore, formation of the series-connected primary coils 35 of the transformers 3 and 4 using one continuous electric wire is facilitated very much. When a thick, rigid wire is used to form the primary coil 35, its extracting portion need not be bent largely, and no problem occurs in formation of a serial body. When the distance between the transformers 3 and 4 (winding cores 33) is small, as the extracting portions need not be bent, no problem occurs in formation of the serial body.

In this manner, as the helically wounded windings can be extracted naturally and substantially along the winding surfaces and can be connected in series, no interference occurs with respect to an adjacent wiring. Therefore, the problems described above, e.g., that the insulating covering of the wiring strips off during formation of a serial body, the cores 32 cannot be inserted in the bobbins 31 due to overlapping of the adjacent wiring and extracting portion, and the like can be prevented. Also, the possible winding area (window area) of the transformers can be utilized effectively. Naturally, the serial connecting portion has a minimum length so that an increase in resistance caused by the serial connecting portion can be minimized.

In the following description, the coils are wound around the bobbins 31. Alternatively, no bobbins need be used, and coils may be wounded around core members directly. The material of the cores is not particularly limited, and air cores may be used. The number of turns of each coil is not limited to two, but suffices as far as it is one or more. The present invention can also be applied to inductors or transformers having non-columnar winding cores 33, as shown in Fig. 11.

In the following description, for the sake of descriptive convenience, coils to be connected in series are wound separately, and after that they are connected in series. Alternatively, the coils may naturally be formed of one continuous electric wire. In this embodiment, the coil to which the present invention is applied is defined as the primary coil. However, the present invention may be applied to the secondary coil, or both the primary and secondary coils. Naturally, the number of serial components such as transformers or inductors is not particularly limited.

### First Embodiment

Fig. 12 is a view for explaining the arrangement of a transformer serial body 10 according to the first embodiment. Although the transformer serial body 10 includes bobbins 31, cores 32, and secondary coils 36 having the same arrangements as those of the transformer serial body 6, primary coils 35 are different from their counterparts of the transformer serial body 6.

As shown in Fig. 12, the transformer serial body 10 is a serial body of two transformers 8 and 9. The primary coils 35 of the transformer 8 include first and second coils 35a and 35b. The primary coils 35 of the transformer 9 include third and fourth coils 35c and 35d. The first to fourth coils 35a to 35d are arranged in the longitudinal direction of the first winding core in the direction from the first coil 35a to the second coil 35b in the order of the first and second coils 35a and 35b, and then in the order of the third and fourth coils 35c and 35d.

The reference positions of the winding start of the first winding core 31 are on a terminal T1 side of the first coil 35a and on a terminal T3 side of the second coil 35b. The two coils 35a and 35b are wound each for one turn in the downward feeding directions in Fig. 12. The reference positions of the winding start of the second winding core 31 are on a terminal T5 side of the third coil 35c and on a terminal T7 side of the fourth coil 35d. The two coils 35c and 35d are wound each for one turn in the upward feeding directions in Fig. 12.

Fig. 13 is a circuit diagram showing the arrangement of a push-pull switching circuit which uses the transformer serial body 10. Terminal numbers T1 to T12 of the transformers shown in Fig. 12 and terminal numbers T1 to T12 of the transformers shown in Fig. 13 are in a one-to-one correspondence. This relationship in correspondence of the terminal numbers also applies to the following embodiments.

As shown in Figs. 12 and 13, when the terminals T2 and T5 and the terminals T4 and T7 are connected to form serial connecting portions, respectively, the four primary coils 35 are connected in series, and terminals T6 and T8 form the center tap (CT) of the primary coils. When connection of the four primary coils 35 is expressed with terminal numbers, a relation (T1-T2)-(T5-T6)-CT-(T8-T7)-(T4-T3) is obtained. The terminals T1 and T3 are connected to the drains of switching elements SW1 and SW2, respectively, and the CT is connected to the positive terminal of a power supply E of the push-pull switching circuit. The sources of the switching elements SW1 and SW2 are connected to the negative terminal of the power supply E.

The two secondary coils 36 of the transformer serial body 10 are connected to each other through the terminals T10 and T11 as a serial connecting portion. An output from the terminals T9 to T12 is full-wave rectified by, e.g., a diode bridge D1 - D4, and is output from an output terminal through a smoothing capacitor C2. Generally, a capacitor C1 is connected to the input of the push-pull switching circuit in order to suppress fluctuations in the DC voltage. Although a MOSFET is used as a switching element in Fig. 13, the type of the switching element is not particularly limited.

In this manner, even when a plurality of coils are arranged on a plurality of winding cores, their serial connecting portion is set to have the minimum length, so that an increase in resistance caused by the serial connecting portion can be minimized.

### Second Embodiment

A transformer serial body according to the second embodiment has a coil arrangement for the push-pull switching element shown in Fig. 13, in the same manner as in the first embodiment. Although the coil arrangement of the transformer serial body of the second embodiment is the same as that of the transformer serial body 10 of the first embodiment, the feeding directions and extracting method of primary coils 35 are different.

Fig. 14 is a conceptual view for explaining a coil winding method and extracting method according to the second embodiment. Coils α and β are wound around a columnar winding core. The two coils are wound in opposite directions, and their different-polarity coil ends are extracted on one side of the columnar winding core. Therefore, the extracting method for the coil β is defined as the lower surface extracting method described above, and the extracting method for the coil α is defined as the upper surface extracting method as the coil α is extracted from a surface opposing the lower surface of the winding core. With this coil arrangement as well, coil ends that form a CT are arranged on one side of the winding core. Thus, connection of the CT is facilitated, and the resistance in the CT can be decreased.

Fig. 15 is a view for explaining the arrangement of a transformer serial body 6 according to the second embodiment. Although the transformer serial body 10 includes bobbins 31, cores 32, and secondary coils 36 having the same arrangements as those of the transformer serial body 6, its primary coils 35 are different from their counterparts of the transformer serial body 6. The transformer serial body 10 of the second embodiment is different from the transformer serial body 10 of the first embodiment in that the extracting method for first and third coils 35a and 35c is changed from the lower surface extracting method to the upper surface extracting method.

In this manner, when a plurality of coils are to be arranged on a plurality of winding cores, even if the extracting methods differ, their serial connecting portion is set to have the minimum length, so that an increase in resistance caused by the serial connecting portion can be minimized.

### Third Embodiment

A transformer serial body according to the third embodiment has a coil arrangement for the push-pull switching element shown in Fig. 13, in the same manner as in the first embodiment. Although the coil arrangement of the transformer serial body of the third embodiment is the same as that of the transformer serial body 10 of the first embodiment, the feeding directions and extracting method of primary coils 35 are different.

Fig. 16 is a view for explaining the arrangement of a transformer serial body 10 according to the third embodiment. Fig. 17 is a view for explaining a method of winding first and third coils 35a and 35c according to the third embodiment. Fig. 18 is a view for explaining a method of winding second and fourth coils 35b and 35d according to the third embodiment.

The transformer serial body 10 of the third embodiment is different from the transformer serial body 10 of the second embodiment shown in Fig. 15 in the feeding directions of the second and fourth coils 35b and 35d. In Fig. 16, terminals T2 and T4 are arranged at one position, and terminals T5 and T7 are arranged at one position. Alternatively, the terminals T2 and T4, and T5 and T7 may be arranged on, e.g., the two surfaces of a printed board, or may be arranged away from each other by a necessary insulating distance. Other terminals T1 and T3, and T6 and T8 may also be arranged on the two surfaces of the printed board. Terminals that are extracted by the same extracting method may be arranged on the same side of the printed board.

In this manner, when a plurality of coils are to be arranged on a plurality of winding cores, even if the extracting methods and feeding directions differ, their serial connecting portion is set to have the minimum length, so that an increase in resistance caused by the serial connecting portion can be minimized. Also, comparatively large spaces can be obtained between the terminals T1 and T3, and between the terminals T6 and T8. Some components can be mounted on these spaces.

### Fourth Embodiment

A transformer serial body according to the fourth embodiment has a coil arrangement for the push-pull switching element shown in Fig. 13, in the same manner as in the first embodiment. Although the coil arrangement of the transformer serial body of the fourth embodiment is the same as that of the transformer serial body 10 of the first embodiment, the feeding directions and extracting method of primary coils 35 are different.

Fig. 19 is a view for explaining the arrangement of a transformer serial body 10 according to the fourth embodiment. Fig. 20 is a view for explaining a method of winding first and fourth coils 35a and 35d according to the fourth embodiment. Fig. 21 is a view for explaining a method of winding second and third coils 35b and 35c according to the fourth embodiment. Fig. 23 is a view of the transformer serial body 10 when seen from the insertion port side of a bobbin.

The transformer serial body 10 according to the fourth embodiment is the same as the transformer serial body 10 of the third embodiment shown in Fig. 16 in the coil arrangement of its first winding core, but is different from the transformer serial body 10 of the third embodiment in the following respects. Namely, the winding directions of the third and fourth coils 35c and 35d of the second winding core are opposite to those shown in Fig. 16. The first and fourth coils 35a and 35d are connected in series with each other through terminals T2 and T7, and the second and third coils 35b and 35c are connected in series with each other through terminals T4 and T5. Also, the extracting method for the third coil 35c is changed from the upper surface extracting method to the lower surface extracting method, and that for the fourth coil 35d is changed from the lower surface extracting method to the upper surface extracting method. The first to fourth coils 35a to 35d are arranged in the longitudinal direction of the first winding core in the direction from the first coil 35a to the second coil 35b in the order of the first and second coils 35a and 35b, and then in the order of the third and fourth coils 35c and 35d. The first coil 35a is fed in the longitudinal direction of the first winding core, in the direction from the first coil 35a to the second coil 35b.

In the same manner as in Fig. 16, in Fig. 19, the terminals T2 and T4 are arranged at one position, and the terminals T5 and T7 are arranged at one position. Alternatively, the terminals T2 and T4, and T5 and T7 may be arranged on, e.g., the two surfaces of a printed board, or may be arranged away from each other by a necessary insulating distance. Other terminals T1 and T3, and T6 and T8 may also be arranged on the two surfaces of the printed board. Terminals that are extracted by the same extracting method may be arranged on the same side of the printed board.

In this manner, when a plurality of coils are to be arranged on a plurality of winding cores, even if the extracting methods and feeding directions differ, their serial connecting portion is set to have the minimum length, so that an increase in resistance caused by the serial connecting portion can be minimized. Also, comparatively large spaces can be obtained between the terminals T1 and T3, and between the terminals T6 and T8, in the same manner as in the third embodiment. Some components can be mounted on these spaces. Since the coils that are to be connected in series are fed in one direction, they have high rigidity in the pitch direction. Thus, when the transformer serial body 10 is to be mounted, its outer shape is less likely to be spoiled.

### Fifth Embodiment

Inductors according to the fifth embodiment of the present invention will be described. In the fifth embodiment, the same components as in the embodiments described above are denoted by the same reference numerals, and a detailed description thereof will be omitted.

Fig. 22 is a view showing the coil arrangement of an inductor serial body 22 according to the fifth embodiment. In the same manner as in the transformers shown in Fig. 10, when inductors are connected in series, the voltage acting on each coil is divided, so that the core loss is decreased. Also, an inductor serial body can be formed in the same manner as in the transformer serial bodies shown in Figs. 12, 15, 16, and 19.

In this manner, the serial connecting portion of the transformers (or inductors) of the fifth embodiment is parallel to the coil extracting directions and has the shortest length. Therefore, formation of the series-connected coils described above using one electric wire is facilitated. When a thick, rigid wire is used to form the winding, the wire need not be bent largely, and no problem occurs in formation of a serial body. When the distance between the transformers or inductors (between winding cores) is small, no problem occurs in formation of a serial body because of the same reason. In this manner, as the helically wounded windings are extracted substantially helically and connected in series, no interference occurs with respect to an adjacent wiring. The insulating covering of the wiring need not be stripped off during formation of a serial body. Since unnecessary overlapping with other winding does not occur due to the same reason, the possible winding area (window area) of the transformers can be utilized effectively.

The coil ends that are to be connected are arranged at the minimum distance from each other. Thus, an increase in resistance can be suppressed regardless of the arrangements of the coils and windings that are connected in series.

As many apparently widely different embodiments of the present invention can be made without departing from the spirit and scope thereof, it is to be understood that the invention is not limited to the specific embodiments thereof except as defined in the appended claims.

In a push-pull switching circuit for a low-voltage, large-current application, it is desired to decrease the resistance of a transformer and of its peripheral circuit. For this purpose, a first coil (35) is wound around a first winding core (31) with respect to as a winding start position a side surface of the first winding core (31) which does not oppose a second winding core (31). A second coil (35) is wound around the second winding core (31), with respect to as a winding start position a side surface of the second winding core (31) which opposes the first winding core (31), in the same winding direction as that of the first coil (35) and in a feeding direction different from that of the first coil (35). The first and second coils are electrically connected in series with each other.

## Claims

1. An electric component, which has a first component having a first winding core, and a second component having a second winding core arranged parallel to a longitudinal direction of the first winding core, comprising:
a first coil which is wound around the first winding core with respect to as a winding start position a side surface of the first winding core which does not oppose the second winding core; and
a second coil which is wound around the second winding core in a feeding direction different from that of the first coil, wherein the second coil is electrically connected in series with the first coil.

2. The electric component according to claim 1, wherein a winding start position of the second coil is a side surface of the second winding core which opposes the first winding core, and the second coil has the same winding direction as that of the first coil.

3. The electric component according to claim 1, wherein the electric component is a transformer or inductor.

4. An electric component, which has a first component having a first winding core, and a second component having a second winding core arranged parallel to a longitudinal direction of the first winding core, comprising:
first and second coils which are wound around the first winding core to be divided in the longitudinal direction of the first winding core; and
third and fourth coils which are wound around the second winding core to be divided in a longitudinal direction of the second winding core,
wherein the first to fourth coils are arranged in the longitudinal direction of the first winding core in a direction from the first coil to the second coil in the order of the first and second coils, and then in the order of the third and fourth coils, and
wherein the first and third coils, and the second and fourth coils, which are arranged adjacent to each other and electrically connected in series with each other have different feeding directions.

5. The electric component according to claim 4, wherein winding start positions of the first and second coils are a side surface of the first winding core which does not oppose the second winding core,
wherein winding start positions of the third and fourth coils are a side surface of the second winding core which opposes the first winding core, and
wherein the first and third coils, and the second and fourth coils have the same winding direction.

6. The electric component according to claim 4, wherein one end of each of the first to fourth coils is extracted between the first and second winding cores.

7. The electric component according to claim 4, wherein the first and second coils have the same feeding direction.

8. The electric component according to claim 4, wherein the first and second coils have different feeding directions.

9. An electric component, which has a first component having a first winding core, and a second component having a second winding core arranged substantially parallel to a longitudinal direction of the first winding core, comprising:
first and second coils which are wound around the first winding core to be divided in the longitudinal direction of the first winding core in different feeding directions; and
third and fourth coils which are wound around the second winding core to be divided in a longitudinal direction of the second winding core in different feeding directions,
wherein the first to fourth coils are arranged in the longitudinal direction of the first winding core in a direction from the first coil to the second coil in the order of the first and second coils, and then in the order of the third and fourth coils, and
wherein the first and fourth coils, and the second and third coils, which are electrically connected in series with each other have the same feeding direction, and the first coil has a feeding direction in the longitudinal direction of the first winding core in a direction from the first coil to the second coil.

10. The electric component according to claim 9, wherein winding start positions of the first and second coils are a side surface of the first winding core which does not oppose the second winding core, and the first and second coils have opposite winding directions,
wherein winding start positions of the third and fourth coils are a side surface of the second winding core which opposes the first winding core, the third and fourth coils have opposite winding directions, and
wherein the first and fourth coils, and the second and third coils have the same winding direction.

11. The electric component according to claim 9, wherein one end of each of the first to fourth coils is extracted between the first and second winding cores.

12. The electric component according to claim 9, wherein the first and second winding cores have columnar shapes.

13. The electric component according to claim 9, wherein the electric component is a transformer for a push-pull switching circuit.

14. A method of manufacturing an electric component which has a first component having a first winding core, and a second component having a second winding core arranged parallel to a longitudinal direction of the first winding core, the method comprising steps of:
winding a first coil around the first winding core;
winding a second coil around the second winding core in a feeding direction different from that of the first coil; and
electrically connecting the first and second coils in series with each other.

15. The method according to claim 14, wherein a winding start position of the first coil is a side surface of the first winding core which does not oppose the second winding core, and
wherein a winding start position of the second coil is a side surface of the second winding core which opposes the first winding core, and the second coil has the same winding direction as that of the first coil.

16. A method of manufacturing an electric component which has a first component having a first winding core, and a second component having a second winding core arranged parallel to a longitudinal direction of the first winding core, the method comprising steps of:
winding first and second coils around the first winding core to be divided in the longitudinal direction of the first winding core;
winding third and fourth coils around the second winding core to be divided in a longitudinal direction of the second winding core; and
arranging the first to fourth coils in the longitudinal direction of the first winding core in a direction from the first coil to the second coil in the order of the first and second coils, and then in the order of the third and fourth coils,
wherein the first and third coils, and the second and fourth coils, which are arranged adjacent to each other and electrically connected in series with each other have different feeding directions.

17. The method according to claim 16, wherein winding start positions of the first and second coils are a side surface of the first winding core which does not oppose the second winding core,
wherein winding start positions of the third and fourth coils are a side surface of the second winding core which opposes the first winding core, and
wherein the first and third coils, and the second and fourth coils have the same winding direction.

18. The method according to claim 16, further comprising a step of extracting one end of each of the first to fourth coils between the first and second winding cores.

19. The method according to claim 16, wherein the first and second coils are fed in the same feeding direction.

20. The method according to claim 16, wherein the first and second coils are fed in different feeding directions.

21. A method of manufacturing an electric component which has a first component having a first winding core, and a second component having a second winding core arranged parallel to a longitudinal direction of the first winding core, the method comprising steps of:
winding first and second coils around the first winding core to be divided in the longitudinal direction of the first winding core in different feeding directions and in opposite winding directions;
winding third and fourth coils around the second winding core to be divided in a longitudinal direction of the second winding core in different feeding directions and in opposite winding directions; and
arranging the first to fourth coils in the longitudinal direction of the first winding core in a direction from the first coil to the second coil in the order of the first and second coils, and then in the order of the third and fourth coils,
wherein the first and fourth coils, and the second and third coils, which are electrically connected in series with each other have the same feeding direction, and the first coil is fed in the longitudinal direction of the first winding core in a feeding direction from the first coil to the second coil.

22. The method according to claim 21, wherein winding start positions of the first and second coils are a side surface of the first winding core which does not oppose the second winding core,
wherein a winding start position of the third and fourth coils are a side surface of the second winding core which opposes the first winding core, and
wherein the first and fourth coils, and the second and third coils have the same winding direction.

23. The method according to claim 21, further comprising a step of extracting one end of each of the first to fourth coils between the first and second winding cores.
